# FASCICULE DE BREVET EUROPEEN

(11) **EP 1 407 946 B1**
(45) Date de publication et mention de la délivrance du brevet: **05.03.2008**
(21) Numéro de dépôt: 03292538.0
(22) Date de dépôt: 13.10.2003
(51) Int. Cl.: B60S 1/04, F16B 33/00

(54) **Mécanisme d'actionnement de balais d'essuie-glace de véhicule automobile et procédé de montage sur une partie de caisse de véhicule**
Kraftfahrzeug-Scheibenwischervorrichtung und Verfahren zum Befestigen an der Fahrzeugkarosserie
Vehicle windscreen wiper device and method for mounting on a vehicle body

(30) Priorité: 11.10.2002 FR 0212689
(43) Date de publication de la demande: 14.04.2004
(73) Titulaire: Peugeot Citroen Automobiles SA, 78943 Vélizy-Villacoublay Cedex (FR)
(72) Inventeur: Jeuffe, Gérard, 78810 Feucherolles (FR); Gaussin, Elsa, 94450 Chevilly Larue (FR)
(74) Mandataire: Domenego, Bertrand

(56) Documents cités:
- EP-A- 0 751 305
- EP-A- 0 781 691
- FR-A- 1 274 016
- FR-A- 2 749 243
- US-A- 5 609 329
- US-B1- 6 216 309

## Description

L'invention concerne un mécanisme d'entraînement de balais d'essuie-glace de véhicule automobile.

Plus précisément, l'invention vise un mécanisme conforme au préambule de la revendication 1. Un tel mécanisme est connu de FR-A- 2 749 243

On a constaté qu'un tel mécanisme de type connu n'était généralement pas immobilisé en rotation de façon complète lors du serrage de l'une quelconque des paires vis/écrou, si un ordre de serrage prédéterminé n'était pas respecté.

L'invention a pour but de résoudre cet inconvénient, et de proposer un mécanisme du type exposé précédemment, qui puisse être aisément et strictement maintenu en position tout au long de l'opération de fixation, et ce quel que soit l'ordre de serrage des paires vis/écrou.

A cet effet, le dispositif suivant l'invention est conforme à la revendication 1.

Avantageusement, un mécanisme selon l'invention peut être conforme à l'une ou plusieurs des revendications 2 à 9.

L'invention vise également un procédé de montage d'un mécanisme tel que décrit précédemment sur une partie de caisse de véhicule automobile.

Un procédé selon l'invention est conforme à la revendication 10.

Un mode de réalisation de l'invention va maintenant être décrit en référence aux dessins annexés sur lesquels :
- la figure 1 est une vue en perspective d'un mécanisme d'entraînement de balais d'essuie-glace et d'une partie de caisse de véhicule automobile sur laquelle doit être fixé le mécanisme, l'ensemble ainsi défini étant équipé d'un dispositif de fixation conforme à l'invention ;
- la figure 2 est une vue schématique d'une part des organes de fixation et d'indexage solidaires du mécanisme, en coupe dans leur plan médian vertical respectif, et d'autre part des organes de fixation et d'indexage complémentaires solidaires de la partie de caisse, en vue de dessus ;
- la figure 3 est une vue, en coupe dans leur plan médian vertical et en position assemblée, de la première paire vis/écrou et de l'ensemble d'indexage du dispositif des figures précédentes ; et
- la figure 4 est une vue analogue, dans un plan de coupe vertical, orthogonal à celui de la figure 3.

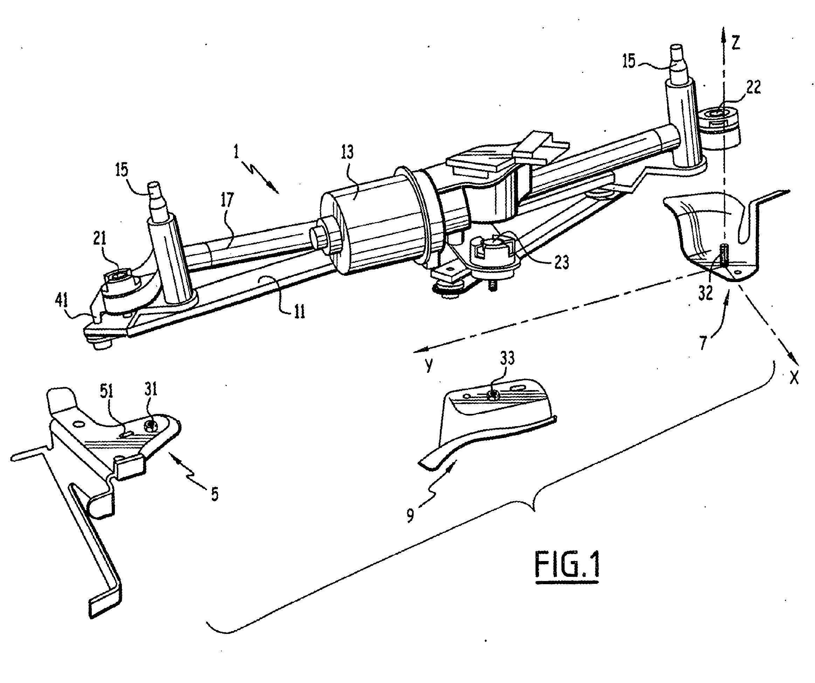

Sur la figure 1, on a représenté une pièce mécanique 1, constituée d'un mécanisme d'entraînement de balais d'essuie-glace pour véhicule automobile, ainsi que trois régions 5, 7, 9 d'une partie de caisse d'un véhicule, sur laquelle doit être fixé le mécanisme 1. Naturellement, même si les trois régions 5, 7, 9 ont été représentées séparées, celles-ci sont en réalité solidaires, voire réalisées d'une pièce.

Le mécanisme 1 comporte essentiellement une platine de support 11, rigide et de forme allongée, un moteur d'entraînement 13 fixé sur une partie centrale de la platine, deux arbres 15 montés rotatifs sur la platine 11 et destinés à entraîner chacun un balai d'essuie-glace en rotation, et un organe de transmission 17 transmettant le mouvement d'entraînement du moteur 13 aux arbres 15. Chaque arbre 15 est monté dans une région d'extrémité respective de la platine 11.

Le mécanisme 1 comporte en outre trois éléments de fixation 21, 22, 23 ménagés sur la platine 11, respectivement au voisinage de chaque arbre 15, et au voisinage du moteur 13, dans une partie centrale de la platine 11.

De façon correspondante, chaque région 5, 7, 9 de la partie de caisse est munie d'un élément de fixation 31, 32, 33 complémentaire de l'élément respectif 21, 22, 23 ménagé sur la pièce mécanique 1.

Dans l'exemple représenté, les éléments de fixation 21, 23 sont des vis embarquées, tandis que les éléments de fixation complémentaires 31, 33 sont des écrous soudés sur leur région de caisse respective 5, 9. L'élément de fixation 22 est un écrou embarqué, tandis que l'élément de fixation complémentaire 32 est une vis soudée sur la partie de caisse 7.

Les trois paires d'éléments de fixation 21, 31 ; 22, 32 ; 23, 33 définissent des points de fixation du mécanisme 1 sur la partie de caisse 5, qui sont non alignés, comme cela apparaît sur la figure 1. Plus précisément, on peut prévoir que le troisième élément soit situé sensiblement dans un plan médian des premier et deuxième éléments. Ceci procure une grande stabilité au mécanisme.

Le mécanisme 1 est enfin doté d'un organe d'indexage 41 associé à un organe complémentaire d'indexage 51 ménagé dans la première région 5 de la partie de caisse.

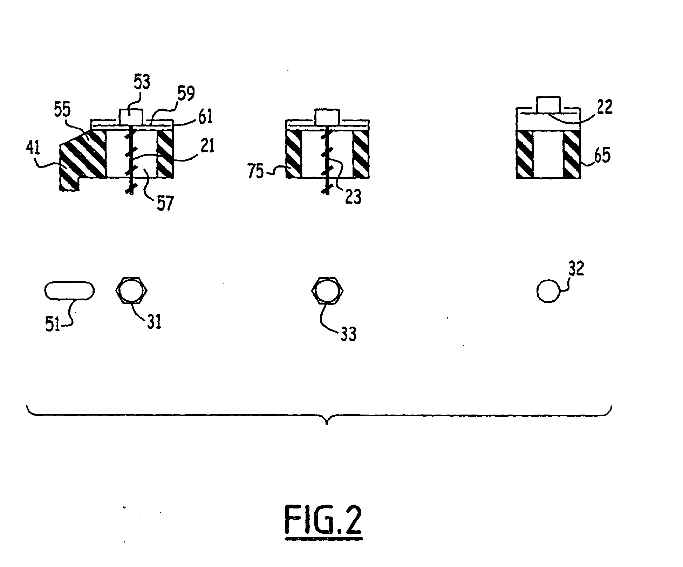

Sur la figure 2, on a représenté en coupe schématique, dans leurs plans médians axiaux respectifs, supposés verticaux, les trois éléments de fixation ménagés sur la partie de caisse 21, 22, 23 et l'organe d'indexage 41. Sont aussi représentés sur la même figure les organes de fixation complémentaires 31, 32, 33 ménagés sur la partie de caisse, et l'organe d'indexage complémentaire 51, en vue de dessus dans un plan horizontal.

Pour plus de clarté, les paires d'éléments de boulonnerie, formées par chaque élément de fixation et son élément de fixation complémentaire, ont été représentées alignées suivant leur axe de serrage. Les trois organes 31, 32, 33 ont également été représentés alignés, alors qu'ils ne le sont pas dans la réalité, comme indiqué précédemment.

Dans la première paire d'éléments de boulonnerie 21, 31, la vis 21 est une vis à tête 53 montée rotative dans un bloc porteur 55, au travers d'un alésage 57.

La tête 53 porte, lors du serrage, directement ou par l'intermédiaire d'une rondelle 59 de plus grand diamètre que celui de l'alésage 57, sur une face supérieure d'appui du bloc 55, la tête étant emprisonnée entre cette face supérieure d'appui et un rebord 61 du bloc 55.

Ainsi, la tête 53 est encapsulée dans le bloc 55, et peut donc être définie comme « imperdable ».

Le bloc 55 est solidaire de la platine 11, ce qui explique que la vis 21 ait été qualifiée d'« embarquée » sur le mécanisme.

L'organe d'indexage 41 est constitué d'un doigt en saillie du bloc 55 par rapport à la surface inférieure de l'alésage 57, le doigt 41 s'étendant parallèlement à l'axe de la vis 21 et de l'alésage 57.

Comme on le voit sur cette figure, l'organe d'indexage complémentaire 51 est une lumière oblongue dont l'axe longitudinal passe par le centre de l'écrou soudé 31, et peut recevoir à coulissement le doigt 41 suivant cet axe.

Le bloc 55 est réalisé au moins partiellement dans un matériau élastomère, de façon à pouvoir être comprimé lors du serrage de la vis 21 et de l'écrou 31, par l'intermédiaire de la rondelle 59. Le bloc 55 est par exemple réalisé d'une pièce moulée en caoutchouc synthétique, le doigt d'indexage 41 étant moulé d'une pièce avec le bloc 55. Ainsi, le bloc 55 réalise-t-il à la fois une fonction de positionnement du mécanisme et d'anti-rotation du mécanisme lors du serrage, et une fonction d'absorption des vibrations.

De façon analogue, l'écrou 22 de la deuxième paire vis/écrou 22, 32 est encapsulé dans un deuxième bloc porteur 65 en matériau élastomère.

Encore de façon analogue, la vis 23 de la troisième paire vis/écrou 23, 33 est encapsulée dans un bloc porteur 75 réalisé dans un matériau élastomère.

Les vis 21 et 23 comportent des sections d'extrémité non filetées, appelées « bouts pilotes ».

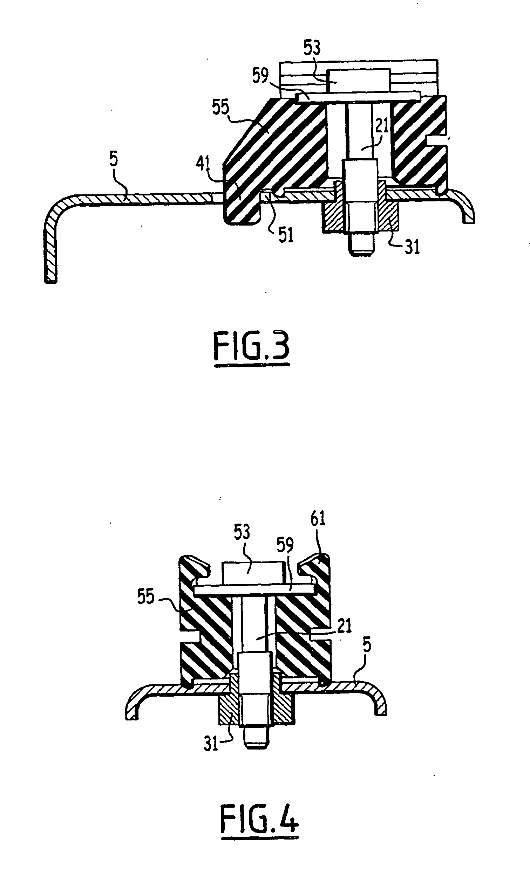

Sur les figures 3 et 4, qui représentent des coupes dans des plans verticaux médians, orthogonaux entre-eux, on a illustré la première paire vis/écrou 21, 31 et les organes d'indexage 41, 51 à l'état assemblé.

En pratique, les écrous 31 et 33 sont fixés sous la partie de caisse tel que représenté pour l'écrou 31 sur les Figures 3 et 4, mais ils pourraient également être fixés sur la partie de caisse.

Dans l'exemple représenté, la rondelle d'appui 59 est réalisée d'une pièce avec la tête d'entraînement 53 de la vis 21.

On constate que dans cet état assemblé, le bloc 55 est légèrement comprimé entre la rondelle 59 et la face supérieure de la région de caisse 5, tandis que le doigt d'indexage 41 s'engage dans la lumière oblongue 51, sans jeu sensible en rotation autour de l'axe de la vis.

Les rebords 61, destinés à maintenir la vis 21 dans le bloc 55, apparaissent mieux sur la figure 4. Ces rebords sont venus de matière d'une partie supérieure du bloc 55, depuis deux régions latérales en vis-à-vis d'un bord périphérique.

Le dispositif de positionnement et de fixation qui vient d'être décrit comprend trois paires vis/écrou 21, 31 ; 22, 32 ; 23, 33 non-alignées, et des organes d'indexage 41, 51 complémentaires permettant de positionner précisément, avant serrage des éléments de fixation, le mécanisme 1 sur la partie de caisse. Il permet aussi de procéder à la fixation définitive, par serrage des éléments de fixation, dans un ordre quelconque, sans perturber le positionnement initial du mécanisme.

En outre, un tel dispositif permet à l'opérateur d'effectuer le serrage de l'un des éléments de fixation sans avoir à maintenir en place les autres éléments pour éviter leur chute, notamment dans une zone de faible accessibilité.

Le montage du mécanisme 1 sur la partie de caisse 5 s'effectue de la façon suivante :
- on engage l'organe d'indexage 41 dans l'organe complémentaire d'indexage 51 de la partie de caisse ;
- on engage simultanément les trois éléments de boulonnerie 21, 22, 23 dans des éléments complémentaires 31, 32, 33 de la partie de caisse; et
- on serre les trois paires d'éléments de boulonnerie 21, 31 ; 22, 32 ; 23, 33.

De façon plus détaillée, le montage s'effectue selon essentiellement trois phases successives, à savoir une première phase de positionnement, une deuxième phase de maintien, et une troisième phase de fixation, explicitées ci-après.

### 1. Positionnement

On assemble en premier le bloc 65 solidaire du mécanisme 1 sur la vis soudée 32 représentant l'axe Z orienté de l'extérieur vers l'intérieur du véhicule, jusqu'à ce que le bloc 65 vienne en appui sur le support 7 solidaire de la vis 32 et représentant la caisse du véhicule. Le fait que le diamètre intérieur du bloc 65 soit sensiblement le même que celui de la vis soudée 32 sur le support 7 implique que le mécanisme 1 est bloqué en translation suivant l'axe Z, et que seule la rotation suivant l'axe Z est possible. En positionnant l'ergot 41 du bloc 55 solidaire du mécanisme d'essuie-vitre 1 dans le logement 51 du support 5 solidaire de la partie de caisse, il bloque la rotation suivant l'axe Z du mécanisme d'essuie-vitre 1. L'intérieur du bloc 55 est de forme oblongue pour récupérer la dispersion de jeu suivant l'axe Y.

Le bloc 75 se trouve automatiquement en appui sur le support 9 représentant la caisse et le diamètre légèrement supérieur à la vis 23 permet le rattrapage de jeu en X et Y.

### 2. Maintien

L'écrou embarqué 22 et les bouts pilotes des vis 21 et 23, qui descendent par gravité dans les taraudages des écrous sertis 31 et 33, permettent de maintenir en position définitive le mécanisme d'essuie-vitre 1 avant serrage.

### 3. Fixation

Les vis 21 et 23 ainsi que l'écrou embarqué 22, tous solidaires du mécanisme d'essuie-vitre 1, peuvent être serrés dans n'importe quel ordre.

## Revendications

1. Mécanisme d'entraînement de balais d'essuie-glace d'un véhicule automobile, comprenant une platine (11) sur laquelle est fixé sur une partie centrale un moteur d'entraînement (13), deux arbres (15) montés rotatifs sur la platine (11), et des moyens de positionnement et de fixation sur une partie de caisse du véhicule, ménagés sur la platine (11) et qui comportent un premier et un deuxième éléments de boulonnerie (21, 22), ménagés respectivement au voisinage de l'un et de l'autre des arbres (15), et dont chacun est destiné à coopérer avec un élément complémentaire (31, 32) respectif ménagé sur la partie de caisse, et un organe d'indexage (41) adapté pour coopérer avec un organe complémentaire d'indexage (51) ménagé dans la partie de caisse (5), lesdits moyens de positionnement et de fixation comportant en outre un troisième élément de boulonnerie (23) destiné à coopérer avec un élément complémentaire (33) ménagé sur la partie de caisse, lesdits moyens de positionnement et de fixation comportant en outre un premier bloc porteur (55), dans lequel est monté rotatif le premier élément de boulonnerie (21), ledit premier bloc porteur (55) étant solidaire de l'organe d'indexage (41) et réalisé au moins partiellement dans un matériau élastomère, et des deuxième et troisième blocs porteurs (65, 75), dans lesquels sont montés rotatifs respectivement les deuxième et troisième éléments de boulonnerie (22, 23), et réalisés en matériau élastomère, de façon à pouvoir être comprimés lors du serrage des premier, deuxième et troisième éléments de boulonnerie (21, 22, 23), **caractérisé en ce que** le troisième élément de boulonnerie (23) est ménagé au voisinage du moteur, dans une partie centrale de la platine (11), **en ce que** les premier, deuxième et troisième éléments respectifs de boulonnerie sont montés imperdables respectivement dans les premier, deuxième et troisième blocs porteurs (55, 65, 75), et **en ce que** le premier bloc porteur (55) comprend un alésage (57) de forme oblongue, le deuxième bloc porteur (65) comprend un diamètre intérieur sensiblement identique à celui de l'élément (32) complémentaire au deuxième élément de boulonnerie (22) ménagé sur la partie caisse, et le troisième bloc (75) comprend un diamètre légèrement supérieur à celui du troisième élément de boulonnerie (23).

2. Mécanisme suivant la revendication 1 **caractérisé en ce que** ledit troisième élément de boulonnerie (23) est non aligné avec les premier et deuxième éléments (21, 22).

3. Mécanisme suivant l'une quelconque des revendications 1 à 2, **caractérisé en ce que** le premier bloc porteur (55) est réalisé d'une pièce, notamment d'une pièce moulée.

4. Mécanisme suivant la revendication 3, **caractérisé en ce que** l'organe d'indexage (41) est réalisé d'une pièce avec le premier bloc porteur (55).

5. Mécanisme suivant l'une quelconque des revendications 1 à 4, **caractérisé en ce que** l'organe d'indexage (41) est un doigt en saillie suivant un axe parallèle à celui du premier élément de boulonnerie (21), prévu pour coopérer avec une lumière oblongue (51) formant organe complémentaire d'indexage.

6. Mécanisme suivant l'une quelconque des revendications 1 à 5, **caractérisé en ce que** le premier élément de boulonnerie (21) est une vis, prévue pour coopérer avec un écrou (31) soudé sur la partie de caisse (5).

7. Mécanisme suivant l'une quelconque des revendications 1 à 6, **caractérisé en ce que** le deuxième élément de boulonnerie (22) est un écrou, prévu pour coopérer avec une vis (32) soudée sur la partie de caisse (7).

8. Mécanisme suivant l'une quelconque des revendications 1 à 7, **caractérisé en ce que** le troisième élément de boulonnerie (23) est une vis, prévue pour coopérer avec un écrou (33) soudé sur la partie de caisse (9).

9. Mécanisme suivant l'une quelconque des revendications 1 à 8, **caractérisé en ce que** le troisième élément de boulonnerie (23) est situé sensiblement dans un plan médian des premier et deuxième éléments (21, 22).

10. Procédé de montage d'un mécanisme suivant l'une quelconque des revendications 1 à 9 sur une partie de caisse de véhicule automobile, **caractérisé en ce qu'**il comprend les étapes successives suivante
- on assemble le deuxième bloc porteur (65) sur l'élément complémentaire (32) du deuxième élément de boulonnerie (22) pour bloquer le mécanisme en translation suivant l'axe du deuxième élément de boulonnerie (22);
- on engage l'organe d'indexage (41) dans l'organe complémentaire d'indexage (51) de la partie caisse (5) pour bloquer le mécanisme en rotation suivant l'axe du deuxième élément de boulonnerie (22);
- on engage simultanément les trois éléments de boulonnerie (21, 22, 23) dans des éléments complémentaires (31, 32, 33) de la partie de caisse (5) ; et
- on serre les trois paires d'éléments de boulonnerie (21, 31 ; 22, 32 ; 23, 33).

11. Procédé de montage suivant la revendication 10, au moins deux (21, 23) des éléments de boulonnerie du mécanisme étant des vis à bout pilote, **caractérisé en ce qu'**on réalise le positionnement du mécanisme en engageant l'organe d'indexage (41) dans un organe complémentaire d'indexage (51) de la partie de caisse (5) ;
**en ce qu'**on réalise le maintien du mécanisme en engageant les bouts pilotes des vis (21, 23) dans leur élément complémentaire respectif (31, 32) ; et
**en ce qu'**on réalise la fixation du mécanisme en serrant les trois paires d'éléments de boulonnerie (21, 31 ; 22, 32 ; 23, 33) dans un ordre quelconque.

## Claims

1. Motor vehicle wiper blade drive mechanism comprising a plate (11) to which is fastened, on a central part, a drive motor (13), two shafts (15) fitted so as to rotate on the plate (11) and means of positioning and fastening on a part of the vehicle body, which means being arranged on the plate (11) and which comprise a first and second bolting element (21 and 22), arranged in the vicinity of each of the shafts (15) respectively and each of which is intended to co-operate with a respective complementary element (31 or 32) arranged on the vehicle body part and an indexing means (41) adapted for co-operating with a complementary indexing means (51) formed in the vehicle body part (5), said positioning and fastening means also comprising a third bolting element (23) intended to co-operate with a complementary element (33) arranged on the vehicle body part, said positioning and fastening means also comprising a first carrying block (55), in which the first bolting element (21) is fitted so as to rotate - said first carrying block (55) being rigidly fastened to the indexing means (41) and made at least partially of an elastomeric material - and second and third carrying blocks (65 and 75), in which the second and third bolting elements (22 and 23) respectively are fitted so as to rotate and being made of an elastomeric material, so as to be compressible during tightening of the first, second and third bolting elements (21, 22 and 23), **characterized in that** the third bolting element (23) is arranged in the vicinity of the motor, in a central part of the plate (11), **in that** the respective first, second and third bolting elements are fitted so as to be captive in the first, second and third carrying blocks (55, 65 and 75) respectively and **in that** the first carrying block (55) comprises a bore (57) of an oblong shape, the second carrying block (65) comprises an inside diameter substantially identical to that of the element (32) complementary to the second bolting element (22) arranged on the vehicle body part and the third block (75) comprises a diameter slightly greater than that of the third bolting element (23).

2. Mechanism according to claim 1, **characterized in that** said third bolting element (23) is unaligned with the first and second elements (21 and 22).

3. Mechanism according to either of claims 1 or 2, **characterized in that** the first carrying block (55) is made in one piece, particularly in one moulded piece.

4. Mechanism according to claim 3, **characterized in that** the indexing means (41) is made in one piece with the first carrying block (55).

5. Mechanism according to any of claims 1 to 4, **characterized in that** the indexing means (41) is a protruding finger having an axis parallel with that of the first bolting element (21), provided for co-operating with an oblong slot (51) forming a complementary indexing means.

6. Mechanism according to any of claims 1 to 5, **characterized in that** the first bolting element (21) is a bolt, provided for co-operating with a nut (31) welded to the vehicle body part (5).

7. Mechanism according to any of claims 1 to 6, **characterized in that** the second bolting element (22) is a nut, provided for co-operating with a bolt (32) welded to the vehicle body part (7).

8. Mechanism according to any of claims 1 to 7, **characterized in that** the third bolting element (23) is a bolt, provided for co-operating with a nut (33) welded to the vehicle body part (9).

9. Mechanism according to any of claims 1 to 8, **characterized in that** the third bolting element (23) is situated substantially in a mid-plane between the first and second elements (21 and 22).

10. Process of fitting a mechanism according to any of claims 1 to 9 to a motor vehicle body part, **characterized in that** it comprises the following successive stages:
- the second carrying block (65) is assembled on the complementary element (32) of the second bolting element (22) in order to lock the mechanism regarding translational motion according to the axis of the second bolting element (22)
- the indexing means (41) is engaged in the complementary indexing means (51) of the vehicle body part (5) in order to lock the mechanism regarding rotation according to the axis of the second bolting element (22)
- the three bolting elements (21, 22 and 23) are engaged at the same time in complementary elements (31, 32 and 33) of the vehicle body part (5) and
- the three pairs of bolting elements (21 and 31, 22 and 32 and 23 and 33) are tightened.

11. Fitting process according to claim 10, at least two (21 and 23) of the mechanism bolting elements being bolts with oval half dog point, **characterized in that** the mechanism is positioned by engaging the indexing means (41) in a complementary indexing means (51) of the vehicle body part (5),
**in that** the mechanism is held by engaging the oval half dogs of the bolts (21 and 23) in their respective complementary elements (31 and 32) and
**in that** the mechanism is fastened by tightening the three pairs of bolting elements (21 and 31, 22 and 32 and 23 and 33) in any order.

## Patentansprüche

1. Kraftfahrzeug-Scheibenwischervorrichtung, umfassend eine Platte (11), auf der in einem mittleren Bereich ein Antriebsmotor (13) befestigt ist, zwei drehbar auf der Platte (11) montierte Wellen (15) und Mittel zum Positionieren und Befestigen an einem Teil der Fahrzeugkarosserie, die auf der Platte (11) angeordnet sind und ein erstes und ein zweites Schraubelement (21, 22) umfassen, die jeweils in der Nähe der einen und der anderen Welle (15) angeordnet sind und die jeweils dazu vorgesehen sind, mit einem an dem Karosserieteil angeordneten jeweiligen komplementären Element (31, 32) zusammenzuwirken, und ein für das Zusammenwirken mit einer im Karosserieteil angeordneten komplementären Weiterschalteinrichtung (51) angepassten Weiterschalteinrichtung (41), wobei diese Mittel zum Positionieren und Befestigen außerdem ein drittes Schraubelement (23) umfassen, das dazu vorgesehen ist, mit einem am Karosserieteil angeordneten komplementären Element (33) zusammenzuwirken, wobei diese Mittel zum Positionieren und Befestigen außerdem einen ersten Trägerblock (55) umfassen, in den das erste Schraubelement (21) drehbar montiert ist, wobei dieser erste Trägerblock (55) einstückig mit der Weiterschalteinrichtung (41) ausgebildet ist und zumindest teilweise aus einem Elastomer-Material gefertigt ist, sowie einen zweiten und einen dritten Trägerblock (65, 75), in denen das zweite bzw. dritte Schraubelement (22, 23) drehbar montiert ist und die aus einem Elastomer-Material gefertigt sind, so dass sie beim Anziehen des ersten, zweiten und dritten Schraubelements (21, 22, 23) zusammengedrückt werden können, **dadurch gekennzeichnet, dass** das dritte Schraubelement (23) in einem mittleren Bereich der Platte (11) in der Nähe des Motors angeordnet ist, dass das erste, zweite bzw. dritte Schraubelement unverlierbar im ersten, zweiten bzw. dritten Trägerblock (55, 65, 75) montiert ist und dass der erste Trägerblock (55) eine längliche Bohrung (57) umfasst, der zweite Trägerblock (65) einen Innendurchmesser aufweist, der im Wesentlichen identisch ist mit dem des zu dem am Karosserieteil angeordneten zweiten Schraubelement (22) komplementären Elements (32), und der dritte Block (75) einen Durchmesser aufweist, der etwas größer ist als der des dritten Schraubelements (23).

2. Vorrichtung nach Anspruch 1, **dadurch gekennzeichnet, dass** das dritte Schraubelement (23) nicht mit dem ersten und zweiten Element (21, 22) fluchtet.

3. Vorrichtung nach einem der Ansprüche 1 bis 2, **dadurch gekennzeichnet, dass** der erste Trägerblock (55) aus einem Stück, insbesondere aus einem Formgussstück, gefertigt ist.

4. Vorrichtung nach Anspruch 3, **dadurch gekennzeichnet, dass** die Weiterschalteinrichtung (41) einstückig mit dem ersten Trägerblock (55) gefertigt ist.

5. Vorrichtung nach einem der Ansprüche 1 bis 4, **dadurch gekennzeichnet, dass** die Weiterschalteinrichtung (41) ein vorstehender Zapfen entlang einer zur Achse des ersten Schraubelements (21) parallelen Achse ist, der dazu vorgesehen ist, mit einer länglichen Öffnung (51), die die komplementäre Weiterschalteinrichtung bildet, zusammenzuwirken.

6. Vorrichtung nach einem der Ansprüche 1 bis 5, **dadurch gekennzeichnet, dass** das erste Schraubelement (21) eine Schraube ist, die dazu vorgesehen ist, mit einer am Karosserieteil (5) angeschweißten Mutter (31) zusammenzuwirken.

7. Vorrichtung nach einem der Ansprüche 1 bis 6, **dadurch gekennzeichnet, dass** das zweite Schraubelement (22) eine Mutter ist, die dazu vorgesehen ist, mit einer am Karosserieteil (7) angeschweißten Schraube (32) zusammenzuwirken.

8. Vorrichtung nach einem der Ansprüche 1 bis 7, **dadurch gekennzeichnet, dass** das dritte Schraubelement (23) eine Schraube ist, die dazu vorgesehen ist, mit einer am Karosserieteil (9) angeschweißten Mutter (33) zusammenzuwirken.

9. Vorrichtung nach einem der Ansprüche 1 bis 8, **dadurch gekennzeichnet, dass** sich das dritte Schraubelement (23) im Wesentlichen in einer Ebene in der Mitte zwischen dem ersten und dem zweiten Element (21, 22) befindet.

10. Verfahren zum Befestigen einer Vorrichtung nach einem der Ansprüche 1 bis 9 an einem Teil der Fahrzeugkarosserie, **dadurch gekennzeichnet, dass** es folgende aufeinanderfolgende Schritte umfasst:
- Einstecken des zweiten Trägerblocks (65) in das komplementäre Element (32) des zweiten Schraubelements (22), um die Vorrichtung entlang der Achse des zweiten Schraubelements (22) verschiebbar festzuhalten;
- Einführen der Weiterschalteinrichtung (41) in die komplementäre Weiterschalteinrichtung (51) des Karosserieteils (5), um die Vorrichtung um die Achse des zweiten Schraubelements (22) drehbar festzuhalten;
- gleichzeitiges Einführen der drei Schraubelemente (21, 22, 23) in komplementäre Elemente (31, 32, 33) des Karosserieteils (5); und
- Anziehen der drei Schraubelementpaare (21, 31; 22, 32; 23, 33).

11. Verfahren zum Befestigen nach Anspruch 10, wobei mindestens zwei (21, 23) der Schraubelemente der Vorrichtung Schrauben mit Ansatzkuppe sind, **dadurch gekennzeichnet, dass** die Positionierung der Vorrichtung erfolgt, indem die Weiterschalteinrichtung (41) in eine komplementäre Weiterschalteinrichtung (51) des Karosserieteils (5) eingesteckt wird;
dass die Vorrichtung gehalten wird, indem die Ansatzkuppen der Schrauben (21, 23) in ihr jeweiliges komplementäres Element (31, 32) eingesteckt werden; und
dass die Vorrichtung befestigt wird, indem die drei Schraubelementpaare (21, 31; 22, 32; 23, 33) in beliebiger Reihenfolge angezogen werden.
